# EUROPEAN PATENT APPLICATION

(11) **EP 3 357 946 A1**
(43) Date of publication of application: **08.08.2018**
(21) Application number: 17305140.0
(22) Date of filing: 07.02.2017
(51) Int. Cl.: C08F 293/00, C09D 153/00, C08L 23/06, C08L 23/12, C08F 220/22

(54) **WATER- AND OIL-REPELLENT RESIN COMPOSITION**

(71) Applicant: DAIKIN INDUSTRIES, LTD., Osaka-shi, Osaka 530-8323 (JP); Arkema France, 92700 Colombes (FR); Arkema K.K., Tokyo 100-0011 (JP)
(72) Inventor: Yamamoto, Ikuo, Osaka, 530-8323 (JP); Sakami, Kazuki, Osaka, 530-8323 (JP); Masuda, Eiji, Osaka, 530-8323 (JP); Bourrigaud, Sylvain, 64370 Morlanne (FR); Hediger, Helene, 64230 Denguin (FR); Cazaumayou, Sylvie, 40100 Dax (FR); Ariura, Fumi, Kanagawa (JP)
(74) Representative: Hoffmann Eitle

(57) **Abstract**

The resin composition having sufficient water and oil repellency and out-of-liquid property is provided. A water- and oil-repellent resin composition which comprises (a) 100 parts by weight of a thermoplastic resin and (b) 0.01-50 parts by weight of a fluorine-containing block copolymer,
wherein the fluorine-containing block copolymer (b) comprises (b1) at least one fluorine-containing block segment and (b2) at least one fluorine-free block segment,
the fluorine-containing block segment (b1) is bonded directly to the fluorine-free block segment (b2), and
the fluorine-containing block segment (b1) is formed from a fluorine-containing acrylate monomer, and the fluorine-free block segment (b2) is formed from a fluorine-free monomer.

## Description

### TECHNICAL FIELD

The present invention relates to a water- and oil-repellent resin composition and a molded product comprising the same. The molded product is characterized in that the fluorine-containing polymer is segregated on a surface of the molded product. The molded product can be used as home household articles, stationeries, interior materials, exterior materials, consumer electronics housings, flooring materials, wallpaper, food packing materials, food containers, cosmetic containers, industrial-chemicals containers, sanitary supplies, medical supplies and the like.

### BACKGROUND ART

Hitherto, known are technologies of subjecting a surface of a molded article to a fluorine treatment so as to impart the water- and oil-repellency to the molded article surface. A method of conducting the fluorine treatment after the molding, however, has the problem that the durability of water- and oil-repellency is weak so that the repeated use makes the water- and oil-repellency to be deteriorated. In order to solve this problem, the studies have been made that a fluorine-containing compound is added to a resin and then melt-kneaded before the molding of resin so that a fluorine component is segregated on a surface after the molding, to impart the water- and oil-repellency.

WO 98/15598 A discloses a resin composition which comprises 100 parts by weight of a thermoplastic resin or thermosetting resin, and 0.1 to 5 parts by weight of a perfluoroalkyl group-containing polymer having a perfluoroalkyl group having 5-18 carbon atoms.

JP H10-168324 A discloses that an additive for imparting water and oil repellency comprising a fluorine-containing polymer having a C₃₋₂₁ polyfluoroalkyl group is added to improve the water and oil repellency of a thermoplastic resin such as polyolefin.

JP H03-007745 A discloses a resin composition comprising a polyolefin resin and a polymerizable compound containing a polyfluoroalkyl group preferably having 4-20 carbon atoms.

JP H03-041162 A discloses a thermoplastic resin composition wherein 0.1 to 5 parts by weight of a perfluoroalkyl group-containing polymer having a C₅₋₁₆ perfluoroalkyl group is added and blended with 100 parts by weight of a thermoplastic resin.

JP 2006-37085 A discloses a resin composition prepared by mixing a fluorine-containing polymer with a thermoplastic resin.

These fluorine-containing polymers are a random copolymer. The resin compositions obtained in these documents do not have sufficient water and oil repellency and out-of-liquid property.

### PRIOR ARTS DOCUMENTS

### PATENT DOCUMENTS

Patent Document 1: WO 98/15598 A
Patent Document 2: JP H10-168324 A
Patent Document 3: JP H03-007745 A
Patent Document 4: JP H03-041162 A
Patent Document 5; JP 2006-37085 A

### DISCLOSURE OF THE INVENTION

### Problems to be Solved by the Invention

In order to maintain the liquid repellency, a fluorine compound should be segregated on the surface by melting, mixing and molding the thermoplastic resin and the fluorine compound. However, even when the moldings are prepared according to the known technologies, the preparation should be carried out under the limited conditions in order to easily segregate the fluorine compound on the surface of the thermoplastic resin, since the fluorine compound has bad compatibility with the thermoplastic resin. Even if the kneading is possible under the usual conditions, the cost and step are not desirable, for example, problems of necessarily increasing the addition amount of the fluorine compound.

### Means for Solving the Problems

We intensively studied to solve these problems, we discovered that, after melt-kneading a specific fluorine-containing polymer and a thermoplastic resin, a molded product is prepared to effectively segregate the fluorine compound on a surface of the thermoplastic resin, and then completed the present invention.

The present invention provides a water- and oil-repellent resin composition which comprises (a) 100 parts by weight of a thermoplastic resin and (b) 0.01-50 parts by weight of a fluorine-containing block copolymer, wherein the fluorine-containing block copolymer (b) comprises (b1) at least one fluorine-containing block segment and (b2) at least one fluorine-free block segment,
the fluorine-containing block segment (b1) is bonded directly to the fluorine-free block segment (b2), and
the fluorine-containing block segment (b1) is formed from a fluorine-containing acrylate monomer, and the fluorine-free block segment (b2) is formed from a fluorine-free monomer.

The present invention provides a water- and oil-repellent resin composition which comprises (a) 100 parts by weight of a thermoplastic resin and (b) 0.01-50 parts by weight of a fluorine-containing block copolymer, wherein the fluorine-containing block copolymer (b) has, at each of ends of the copolymer, a group prepared by cleaving an alkoxyamine,
the fluorine-containing block copolymer (b) comprises (b1) at least one fluorine-containing block segment and (b2) at least one fluorine-free block segment,
the fluorine-containing block segment (b1) is formed from a fluorine-containing acrylate monomer, and the fluorine-free block segment (b2) is formed from a fluorine-free monomer.

The present invention provides a method of producing a water- and oil-repellent resin composition which comprises (a) a thermoplastic resin and (b) a fluorine-containing block copolymer,
wherein said method comprises steps of:
(1) preparing the fluorine-containing block copolymer (b) by a living-radical-polymerization process using a alkoxyamine, wherein the fluorine-containing block copolymer (b) comprises (b1) at least one fluorine-containing block segment and (b2) at least one fluorine-free block segment (b2), and
(2) mixing the fluorine-containing block copolymer (b) with the thermoplastic resin (a) to give the water- and oil-repellent resin composition.

### Effects of the Invention

The water- and oil-repellent resin composition of the present invention has high water and oil repellency (especially high oil repellency), even if the amount of the fluorine-containing block copolymer is small. The present invention provides a molded product excellent in water and oil repellency and an out-of-liquid property.

### Description of Embodiments

In the present invention, the thermoplastic resin (a) and the fluorine-containing block copolymer (b) are used. The water- and oil-repellent resin composition is a mixture prepared by mixing the thermoplastic resin (a) with the fluorine-containing block copolymer (b).

### (a) Thermoplastic resin

Examples of the thermoplastic resin (a) include a polyamide resin (for example, nylon 6, nylon 12, nylon 66, aromatic nylon), a polyester resin (for example, polyethylene terephthalate and polybutylene terephthalate), a polyolefin resin (for example, polyethylene, polypropylene, a copolymer of ethylene and propylene, a copolymer of ethylene or propylene and C₄-C₂₀ alpha-olefin, a terpolymer of ethylene, propylene and C₄-C₂₀ alpha-olefin, a copolymer of ethylene and vinyl acetate, a copolymer of propylene and vinyl acetate, a copolymer of styrene and alpha-olefin, polybutylene and polyisobutylene), a polyether resin, a polyetherester resin, a poly(meth)acrylate resin, an ethylenealkyl (meth)acrylate resin, a polydiene resin (for example, a polybutadiene and a copolymer of isobutylene and isoprene), a polyurethane resin, a polyetheretherketone resin, a polyetherimide resin, a polyethersulfone resin, a polyphenylene sulfide resin, a polycarbonate resin and a vinyl chloride resin.

Among them, the polyolefin resin is preferable. Polyethylene, polypropylene, an ethylene/propylene random copolymer, an ethylene/alpha-olefin copolymer, a propylene alpha-olefin copolymer, and polybutylene can be used as the polyolefin resin. Polyethylene and polypropylene are preferable.

Polyethylene includes high-density polyethylene and low-density polyethylene. Polypropylene includes isotactic polypropylene, syndiotactic polypropylene, atactic polypropylene, and amorphous polypropylene.

The above-mentioned isotactic polypropylene is high-crystallinity propylene based on isotactic propylene prepared by using a Ziegler-Natta catalyst or a metallocene catalyst. The above-mentioned isotactic polypropylene can be selected and available from generally commercially available propylene for the molding, such as propylene for injection molding, propylene for extrusion molding, propylene for film and propylene for fiber.

The above-mentioned amorphous polypropylene is propylene having extremely low crystallinity prepared by using a metallocene catalyst. The amorphous polypropylene may be a mixture of propylene having extremely low crystallinity prepared by using a metallocene catalyst (for example, in the amount of at least 50% by weight based on total amount of the mixture) and other propylene. The amorphous polypropylene is available as, for example, Tafthren T-3512 and T-3522 manufactured by Sumitomo Chemical Co., Ltd.

In the present invention, the thermoplastic resin (a) may be a mixture of at least two thermoplastic resins.

### (b) Fluorine-containing block copolymer

The fluorine-containing block copolymer has (b1) at least one fluorine-containing block segment and (b2) at least one fluorine-free block segment.

The fluorine-containing block copolymer is preferably:
an AB diblock copolymer having one fluorine-containing block segment (b1) and
one fluorine-free block segment (b2), or
an ABA triblock copolymer having two fluorine-containing block segments (a first fluorine-containing block segment (b1) and a second fluorine-containing block segment (b1')) and one fluorine-free block segment (b2) positioned between the two fluorine-containing block segments.

### (b1) Fluorine-containing block segment

The fluorine-containing block segment is formed from the fluorine-containing monomer and has repeating units derived from the fluorine-containing monomer.

Preferably, the fluorine-containing monomer is represented by the formula:

CH₂=CX-C(=O)-O-Y-Rf

wherein Rf is a perfluoroalkyl group having 1 to 8 carbon atoms,
X is a hydrogen atom, a methyl group, a fluorine atom or a chlorine atom, and
Y is an aliphatic group having at least 1 carbon atom.

The number of carbon atoms in Y may be 1 to 30. Y may be a linear or branched aliphatic group (particularly an alkylene group) having 1-20 carbon atoms, for example, a group shown by formula -(CH₂)ₓ- (wherein x is 1 to 20, preferably 1 to 10).

In the fluorine-containing monomer, Rf is the perfluoroalkyl group. Preferably, the number of carbon atoms in the Rf group is from 1 to 8, for example, from 4 to 8, particularly from 4 to 6. Examples of the Rf group include -CF₂CF₂CF₂CF₃, -CF₂CF(CF₃)₂, -C(CF₃)₃, -(CF₂)₄CF₃, -(CF₂)₂CF(CF₃)₂,-CF₂C(CF₃)₃, -CF(CF₃)CF₂CF₂CF₃, -(CF₂)₅CF₃, -(CF₂)₃CF(CF₃)₂,-(CF₂)₄CF(CF₃)₂ and -C₈F₁₇.

Non-limiting examples of the fluorine-containing monomer include the followings:

CH₂=C(-H)-C(=O)-O-(CH₂)₂-Rf

CH₂=C(-CH₃)-C(=O)-O-(CH₂)₂-Rf

CH₂=C(-Cl)-C(=O)-O-(CH₂)₂-Rf

wherein Rf is a perfluoroalkyl group having 1 to 8 carbon atoms.

Generally the fluorine-containing block segment (b1) is formed from one fluorine-containing monomer, but the fluorine-containing block segment (b1) may be formed from at least two fluorine-containing monomers. The fluorine-containing block segment (b1) may be the same as or different from the other fluorine-containing block segment (b1').

### (b2) Fluorine-free block segment

The fluorine-free block segment is formed from the fluorine-free monomer and has repeating units derived from the fluorine-free monomer. Preferably, the fluorine-free monomer is radically polymerizable. The fluorine-free monomer may be a fluorine-free acrylate monomer, a fluorine-free vinyl monomer or a fluorine-free acrylic acid monomer. Preferably, the fluorine-free monomer is the fluorine-free acrylate monomer. The fluorine-free block segment may be formed from the fluorine-free acrylate monomer alone, or the fluorine-free block segment may be formed from at least one of the fluorine-free vinyl monomer and the fluorine-free acrylic acid monomer in addition to the fluorine-free acrylate monomer.

In the fluorine-free monomer (especially the fluorine-free acrylate monomer), alpha-positions may be a hydrogen atom, a methyl group, or a halogen atom (for example, chlorine, bromine, or iodine) other than a fluorine atom. Preferably, the fluorine-free acrylate monomer is a fluorine-free acrylate ester.

The fluorine-free acrylate monomer may be represented by the formula:

CH₂=CA¹COO-A²

wherein A¹ is a hydrogen atom, a methyl group, or a halogen atom (for example, chlorine, bromine or iodine) other than a fluorine atom,
A² is a hydrocarbon group having 1-30 carbon atoms.

Examples of the hydrocarbon group having 1-30 carbon atoms are a linear or branched aliphatic hydrocarbon group having 1-30 carbon atoms, a cycloaliphatic group having 4-30 carbon atoms, an aromatic hydrocarbon group having 6-30 carbon atoms, and an araliphatic hydrocarbon group having 7-20 carbon atoms. A preferable example of the hydrocarbon group is an alkyl group.

Preferably, the hydrocarbon group (preferably the alkyl group) has 14 to 30 carbon atoms, for example, 16-26 carbon atoms.

Examples of the fluorine-free acrylate monomer include methyl (meth)acrylate, ethyl (meth)acrylate, butyl (meth)acrylate, 2-hydroxyethyl (meth)acrylate, lauryl (meth)acrylate, cetyl (meth)acrylate, stearyl (meth)acrylate, behenyl (meth)acrylate, cyclohexyl (meth)acrylate, isobornyl (meth)acrylate and glycidyl (meth)acrylate.

The fluorine-free vinyl monomer is represented by the formula:

CH₂=CH-A³

wherein A³ is a hydrogen atom, a halogen atom other than a fluorine atom (for example, chlorine, bromine or iodine), a hydrocarbon group having 1-30 carbon atoms, an alkyl ester group (or carboxylate group) having 1-4 carbon atoms, a phenyl group, a 2-pyrrolidone group, a nitrile group, or CONH₂.

Preferable examples of the fluorine-free vinyl monomer are styrene, N-vinyl-2-pyrrolidone, vinyl chloride, vinyl acetate, acrylonitrile and acrylamide.

The fluorine-free acrylic acid monomer may be represented by the formula:

CH₂=CA⁴COOH

wherein A⁴ is a hydrogen atom or a methyl group.

Preferable examples of the fluorine-free acrylic acid monomer are acrylic acid and methacrylic acid.

Generally the fluorine-free block segment (b2) is formed from one fluorine-free monomer, but the fluorine-free block segment (b2) may be formed from at least two fluorine-free monomers. The fluorine-free block segment (b2) may be the same as or different from the other fluorine-free block segment (b2').

Preferably, the fluorine-containing block copolymer (especially the fluorine-free block segment (b2)) is free from a chlorine-containing monomer, particularly vinyl chloride.

In the fluorine-containing block copolymer, a weight ratio of the fluorine-containing block segment to the fluorine-free block segment (that is, a weight ratio of the repeating units in the fluorine-containing block segment to the repeating units in the fluorine-free block segment) may be 5:95-70:30, for example, 10:90-50:50.

A fluorine-containing block copolymer can be manufactured by the following process.

The process is characterized in that it comprises:
1) firstly, in preparing, according to a conventional polymerization recipe, the first block B by mixing the monomer(s) with an alkoxyamine of general formula (IV): 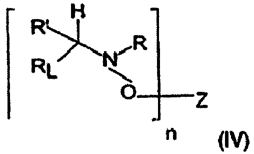
   where Z is a polyvalent radical carrying end functional groups of styryl or acryloyl type which may have 3 to 15 carbon atoms,
   R and R¹, identical or different, represent a linear or branched alkyl group, with the carbon atoms from 1 to 4,
   R_{L} is phosphoryl group which can be represented by the formula: 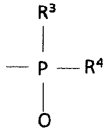 in which R³ and R⁴, which can be identical or different, can be chosen from alkyl, cycloalkyl, alkoxyl, aryloxyl, aryl, aralkyloxyl, perfluoroalkyl or aralkyl radicals and can be comprise from 1 to 20 carbon atoms.
   Preferably, a suitable alkoxyamine is a nitroxide-based alkoxyamine, more preferably N-(2-methylprolyl)-N-(1-diethylphosphono-2,2-dimethylpropyl)-*O*-(2-carboxylprop-2-yl) hydroxylamine (also known as Blocbuilder® MA available from Arkema).
   The polymerization is carried out at temperatures ranging from 60 to 250°C, preferably from 90 to 160°C, for pressures ranging from 0.100 bar to 80 bar, preferably from 0.5 bar to 10 bar.
   The polymerization has to be controlled and the latter will preferably be halted before 99% conversion, preferably before 90% conversion. The block B thus obtained is either used with the residual monomers or is purified from the monomers by distillation or washing and drying with a solvent which is immiscible with B and miscible with the monomers used.
2) Secondly, the process consists in diluting the first block B obtained in the mixture of monomers intended to form the blocks A and a solvent when needed. The polymerization is carried out at temperatures ranging from 60 to 250°C, preferably from 90 to 160°C, for pressures ranging from 0.100 bar to 80 bar, preferably from 0.5 bar to 10 bar.

The conversion of the monomer varies from 10 to 100% and the polymer obtained is separated from the residual monomers by evaporation under vacuum at temperatures ranging up to 250°C and preferably 200°C.

A weight-average molecular weight of the fluorine-containing block copolymer may be 1,000 to 5,000,000, preferably 3,000 to 200,000, more preferably 5,000 to 100,000. When the weight-average molecular weight is within said range, the fluorine-containing block copolymer can give high oil repellency by sufficiently segregating on the surface without bleeding out from the surface.

A solvent such as an organic solvent may be used for a polymerization and/or dilution. The organic solvent is inert to the monomer, and dissolves the monomer, and examples of the organic solvent include an ester such as ethyl acetate and butyl acetate; a ketone such as methyl ethyl ketone and diisobutyl ketone; and a hydrocarbon such as toluene.

A solid prepared by removing the fluorine-containing block copolymer from the solvent may be added to the thermoplastic resin.

The block copolymers of the invention correspond to the general formula B (A)n, n being a natural number of at least one or two, preferably between 2 and 20 and preferably between 2 and 8; where B represents a polymer block composed of the sequence of monomer units which can be polymerized by the radical route. A is a polymer block composed of a sequence of fluorinated monomer units which can be polymerized by the radical route. The fluorine-containing block copolymer may be a linear polymer preferably having two ends.

According to the invention, the block copolymer exhibits a polydispersity index of between 1.5 and 3, advantageously of between 1.8 and 2.7 and preferably of between 1.9 and 2.5. On the other hand, the block B exhibits a polydispersity index of less than 2.

This process is based on the "controlled radical polymerization" polymerization technique based on the use of stable nitroxides. The general synthetic scheme is as follows: in a first step, the block B, preferably with a flexible or elastomeric nature, is prepared by polymerization in the presence of a well chosen nitroxide and, in a second step, by using the block B as polymerization initiator, the branches A, preferably with a stiff or thermoplastic nature, are prepared.

It is known that stable nitroxides can result in the formation of block copolymers by controlled radical polymerization (WO 9624620, WO 2000071501 A1 20001130, EP 1142913 A1 20011010). By virtue of certain families of nitroxides described in the abovementioned patents, block copolymers incorporating units as difficult to control by the conventional radical route as acrylates are described.

The amounts of the fluorine-containing block copolymer (b) may be 0.01 to 50 parts by weight, preferably 0.1 to 20 parts by weight, for example, 0.2 to 10 parts by weight, particularly 0.5 to 5 parts by weight, based on 100 parts by weight of the thermoplastic resin (a).

The water- and oil-repellent resin composition may contain additives (that is, aids), for example, a dye, a pigment, an antistatic agent, an antioxidant, a photo-stabilizers, a UV-absorber, a neutralizer, a nucleating agent, an epoxy-stabilizer, a sliding agent, a fungus preventing agent, a flame retardant, and a plasticizer, depending on the necessity.

The water- and oil-repellent resin composition can be prepared by steps of:
(1) preparing the fluorine-containing block copolymer (b) by using an alkoxyamine, and
(2) mixing the fluorine-containing block copolymer (b) with the thermoplastic resin (a) to give the water- and oil-repellent resin composition.

The water- and oil-repellent resin composition of the present invention can be obtained by kneading (for example, melt-kneading) the thermoplastic resin (a) with the fluorine-containing block copolymer (b). A thermoforming is preferable. Generally, the thermoplastic resin (a) and the fluorine-containing block copolymer (b) are compatible under the melt state. The kneading can be conducted by conventional procedures, for example, a single screw extruder, a twin screw extruder and a roll. Thus obtained water- and oil-repellent resin composition can be molded by conventional procedures such as an extrusion molding process, an injection molding process, a compression molding process, a blow molding process, and a film formation by press. The water- and oil-repellent resin composition may be molded into various molded articles such as a fiber, a film, a tube and a bottle. The obtained molded article may be heat-treated in an oven, a drying oven and the like, after the molding. The fiber may have a diameter of 0.2 to 2,000 micrometers, for example, 0.5 to 50 micrometers, and a length of 0.2 mm to 200 mm, for example, 2 to 30 mm.

The water- and oil-repellent resin composition may be made in the form of a non-woven fabric. The non-woven fabric can be obtained by a carding method, an air laid method, a paper manufacturing method, or a melt blown method or a spun bond method wherein the non-woven fabric is directly obtained from the melt extrusion. In the melt extrusion, it is preferable to use a temperature of melting both the thermoplastic resin (a) and the fluorine-containing block copolymer (b). The basis weight of the non-woven fabric is not particularly limited, but may be from 0.1 to 2,000 g/m², for example, 1 to 1,000 g/m². The basis weight of the non-woven fabric is, for example, from 5 to 60 g/m² for a surface material of a liquid-absorbing article and the like; from 10 to 500 g/m² for an absorbing article, a wiper and the like; from 8 to 1,000 g/m² for a filter, according to uses of the non-woven fabric.

### EXAMPLES

Hereinafter, the present invention will be illustrated in detail by the following Examples, which do not limit the present invention.

In the following Examples, parts and % are parts by weight and % by weight, unless otherwise specified.

Properties were measured as follows.

### Molecular weight and polydispersity index

A weight-average molecular weight, a number average molecular weight and a polydispersity index (Mw/Mn) were determined by GPC (gel permeation chromatography) in terms of polystyrene.

### Water repellency and oil repellency

A static contact angle was measured by water and n-hexadecane (HD) by Drop Master 701 manufactured by Kyowa Interface Science Co., Ltd.

### Liquid piece evaluation

A drop of n-hexadecane, oleic acid or red chili pepper oil (0.2 mL each) was put on a film, the film was inclined at 45 degrees, and a flow trace of the liquid after flowing 4 cm was visually evaluated. The flow trace becomes thin when the liquid has good oil repellency, while the flow trace does not become thin to keep thick when the liquid has bad oil repellency. Visual observation evaluated the oil repellency as "Good" when the liquid trace is thin, and as "Bad" when the liquid trace is thick.

The abbreviations of the monomers are as follows.
- C6SFA:: CF₃(CF₂)₅CH₂CH₂OCOCH=CH₂
- StA:: Stearyl acrylate
- LA:: Lauryl acrylate
- BA:: n-Butyl acrylate

### Preparative Example 1 (Di-block polymer)

### Preparation of the macro-initiator solution:

440g of stearyl acrylate (StA), 38.1g of Blocbuilder® MA and 236.9g of toluene are introduced in a stainless steel stirred closed tank reactor of 1.5L total volume. Nitrogen is blown in the vessel to decrease oxygen presence and the unwanted side reactions which may occur. The reactor is closed. The reactor is heated to 90°C internal temperature within 20 min thanks to a double jacket system. Then it is maintained at 90°C for 20 min. Then temperature is increased to 100°C in 10 minutes and maintained at 100°C for 80 min. Then it is increased to 110°C in 10°C and maintained at 110°C during 120 min. In a last step, it is increased to 115°C in 10 min and maintained at 115°C during 150min. Then the reactor is cooled down to room temperature. The final mixture is called macro-initiator solution.

### Preparation of the block copolymer:

275g of the macro-initiator solution, 188g of fluorinated acrylate monomer CF₃(CF₂)₅CH₂CH₂OCOCH=CH₂ (C6SFA) and 88g of toluene are introduced in a second stainless steel stirred closed tank reactor of 1.5L total volume. Nitrogen is blown in the vessel to decrease oxygen presence and the unwanted side reactions which may occur. The reactor is closed. The reactor is heated to 90°C internal temperature within 20 min thanks to a double jacket system. Then temperature is increased to 100°C in 30 minutes and maintained at 100°C for 10 min. Then it is increased to 105°C in 10°C and maintained at 105°C during 40 min. Then it is increased to 110°C in 10°C and maintained at 110°C during 60 min. In a last step, it is increased to 115°C in 10°C and maintained at 115°C during 230min. Then the reactor is cooled down to room temperature. The solution is then recovered from the reactor and dried in a vacuum oven to obtain the final block co-polymer under a solid form. This copolymer had a number-average molecular weight (Mn) of 8,917, a weight-average molecular weight (Mw) of 9,763 and a polydispersity index (Mw/Mn) of 1.23. The monomer composition in the resultant polymer was almost the same as the composition of the charged monomer.

### Preparative Example 2 (Tri-block polymer):

### Preparation of the polyalcoxyamine DIAMINS:

The following are introduced into a 100 ml round bottom flask purged with nitrogen: 2 g of Blocbuilder® MA, 0.55 g of 1,4-butanediol diacrylate, sold by Aldrich, with a purity of 90%, 5.7 ml of ethanol. The mixture is heated at reflux temperature 78°C for 20 h and then the ethanol is evaporated under vacuum. 2.5 g of a highly viscous yellow oil are obtained.

### Preparation of the macro-initiator solution:

410g of stearyl acrylate (StA), 11.3g of DIAMINS and 110g of toluene are introduced in a stainless steel stirred closed tank reactor of 1.5L total volume. Nitrogen is blown in the vessel to decrease oxygen presence and the unwanted side reactions which may occur. The reactor is closed. The reactor is heated to 110°C internal temperature within 20 min thanks to a double jacket system. Then it is maintained at 110°C for 30 min. Then temperature is increased to 115°C in 10 minutes and maintained at 115°C for 1100 min. Then the reactor is cooled down to room temperature. The final mixture is called macro-initiator solution.

### Preparation of the block copolymer:

184g of the macro-initiator solution, 153g of fluorinated acrylate monomer C6SFA and 203g of toluene are introduced in a second stainless steel stirred closed tank reactor of 1.5L total volume. Nitrogen is blown in the vessel to decrease oxygen presence and the unwanted side reactions which may occur. The reactor is closed. The reactor is heated to 105°C internal temperature within 20 min thanks to a double jacket system. Then temperature is increased to 110°C in 10 minutes and maintained at 110°C for 60 min. Then it is increased to 115°C in 10°C and maintained at 115°C during 550 min. Then the reactor is cooled down to room temperature. The solution is then recovered from the reactor and dried in a vacuum oven to obtain the final block co-polymer under a solid form. This copolymer had a number-average molecular weight (Mn) of 39,256, a weight-average molecular weight (Mw) of 61,129 and a polydispersity index (Mw/Mn) of 1.55. The monomer composition in the resultant polymer was almost the same as the composition of the charged monomer.

### Preparative Example 3 (Di-block polymer)

470g of lauryl acrylate (LA), 40.3g of Blocbuilder® MA and 110g of toluene are introduced in a stainless steel stirred closed tank reactor of 1.5L total volume. Nitrogen is blown in the vessel to decrease oxygen presence and the unwanted side reactions which may occur. The reactor is closed. The reactor is heated to 90°C internal temperature within 20 min thanks to a double jacket system. Then it is maintained at 90°C for 20 min. Then temperature is increased to 100°C in 10 minutes and maintained at 100°C for 80 min. Then it is increased to 105°C in 10°C and maintained at 105°C during 50 min. In a last step, it is increased to 110°C in 10 min and maintained at 110°C during 120min. Then the reactor is cooled down to room temperature. The final mixture is called macro-initiator solution.

### Preparation of the block copolymer:

250g of the macro-initiator solution, 206g of fluorinated acrylate monomer C6SFA and 135g of toluene are introduced in a second stainless steel stirred closed tank reactor of 1.5L total volume. Nitrogen is blown in the vessel to decrease oxygen presence and the unwanted side reactions which may occur. The reactor is closed. The reactor is heated to 90°C internal temperature within 20 min thanks to a double jacket system and maintained at 90°C during 20 min. Then temperature is increased to 100°C in 10 minutes and maintained at 100°C for 50 min. Then it is increased to 110°C in 10°C and maintained at 110°C during 60 min. In a last step, it is increased to 115°C in 10°C and maintained at 115°C during 230min. Then the reactor is cooled down to room temperature. The solution is then recovered from the reactor and dried in a vacuum oven to obtain the final block co-polymer under a solid form. This copolymer had a number-average molecular weight (Mn) of 9,560, a weight-average molecular weight (Mw) of 12,187 and a polydispersity index (Mw/Mn) of 1.27. The monomer composition in the resultant polymer was almost the same as the composition of the charged monomer.

### Preparative Example 4 (Di-block polymer)

### Preparation of the macro-initiator solution:

750g of butyl acrylate (BA), 3.61g of Blocbuilder® MA are introduced in a stainless steel stirred closed tank reactor of 1.5L total volume. Nitrogen is blown in the vessel to decrease oxygen presence and the unwanted side reactions which may occur. The reactor is closed. The reactor is heated to 110°C internal temperature within 20 min thanks to a double jacket system. Then it is maintained at 110°C for 300 min. Then the reactor is cooled down to 80°C. The reactor is put under vacuum at absolute pressure of 0.01 bar during 180min to remove butyl acrylate unreacted monomers. Then the temperature is decreased to 50°C and 207.5g of toluene are added. This final mixture is called macro-initiator solution.

### Preparation of the block copolymer:

200g of the macro-initiator solution, 148g of fluorinated acrylate monomer C6SFA and 230g of toluene are introduced in a second stainless steel stirred closed tank reactor of 1.5L total volume. Nitrogen is blown in the vessel to decrease oxygen presence and the unwanted side reactions which may occur. The reactor is closed. The reactor is heated to 110°C internal temperature within 30 min thanks to a double jacket system. Then temperature is maintained at 110°C for 30 min. Then it is increased to 115°C in 10°C and maintained at 115°C during 60 min. Then it is increased to 120°C in 10°C and maintained at 120°C during 180 min. Then the reactor is cooled down to 60°C. 196g of toluene are then added. Then the reactor is cooled down to room temperature. The solution is then recovered from the reactor and dried in a vacuum oven to obtain the final block co-polymer under a solid form. This copolymer had a number-average molecular weight (Mn) of 47,640, a weight-average molecular weight (Mw) of 95,015 and a polydispersity index (Mw/Mn) of 1.99. The monomer composition in the resultant polymer was almost the same as the composition of the charged monomer.

### Preparative Example 5 (Tri-block polymer):

### DIAMINS is prepared as in Preparative Example 2.

### Preparation of the macro-initiator solution:

750g of butyl acrylate (BA), 18.7g of DIAMINS are introduced in a stainless steel stirred closed tank reactor of 1.5L total volume. Nitrogen is blown in the vessel to decrease oxygen presence and the unwanted side reactions which may occur. The reactor is closed. The reactor is heated to 115°C internal temperature within 20 min thanks to a double jacket system. Then it is maintained at 115°C for 360 min. Then the reactor is cooled down to 80°C. The reactor is put under vacuum at absolute pressure of 0.01 bar during 120min to remove butyl acrylate unreacted monomers. Then the temperature is decreased to 70°C and 279g of toluene are added. This final mixture is called macro-initiator solution.

### Preparation of the block copolymer:

230g of the macro-initiator solution, 143g of fluorinated acrylate monomer C6SFA and 185g of toluene are introduced in a second stainless steel stirred closed tank reactor of 1.5L total volume. Nitrogen is blown in the vessel to decrease oxygen presence and the unwanted side reactions which may occur. The reactor is closed. The reactor is heated to 110°C internal temperature within 30 min thanks to a double jacket system. Then temperature is maintained at 110°C for 40 min. Then it is increased to 115°C in 10°C and maintained at 115°C during 120 min. Then it is increased to 120°C in 10°C and maintained at 120°C during 250 min. Then the reactor is cooled down to 80°C. 212g of toluene are then added. Then the reactor is cooled down to room temperature. The solution is then recovered from the reactor and dried in a vacuum oven to obtain the final block co-polymer under a solid form. This copolymer had a number-average molecular weight (Mn) of 79,615, a weight-average molecular weight (Mw) of 171,750 and a polydispersity index (Mw/Mn) of 2.1. The monomer composition in the resultant polymer was almost the same as the composition of the charged monomer.

### Comparative Preparative Example 1 (Random copolymer)

Hundred (100) parts by weight of toluene as a solvent, 52 parts of CF₃(CF₂)₅CH₂CH₂OCOCH=CH₂ (C6SFA) as a fluorine-containing monomer, 48 parts of stearyl acrylate (StA) as a fluorine-free monomer, and 0.5 parts of N,N'-azobisisobutyronitrile (AIBN) were charged into a flask and a polymerization reaction was conducted at 65 °C for 12 hours to give a solution of a fluorine-containing random copolymer. The copolymer solution was precipitated with ethanol and dried to give the fluorine-containing random copolymer. This copolymer had a number-average molecular weight (Mn) of 8,000, a weight-average molecular weight (Mw) of 13,600 and a polydispersity index (Mw/Mn) of 1.7. The monomer composition in the resultant polymer was almost the same as the composition of the charged monomer.

### Examples 1a-5a and Comparative Example 1

### (Preparation of coating composition)

A 1% solution of a polymer in a solvent (a mixture of chloroform and a fluorine-containing solvent) was applied on a silicon plate, and dried for one day to give a coated plate. A contact angle of water or hexadecane on the coated plate was measured. The results are shown in Table 1.

**Table 1**

| | Polymer | Static contact angle | |
|---|---|---|---|
| | | H₂O | n-HD |
| Blank | None (solvent alone) | 23 | 19 |
| Example 1a | Preparative Example 1 | 108 | 64 |
| Example 2a | Preparative Example 2 | 110 | 74 |
| Example 3a | Preparative Example 3 | 86 | 30 |
| Example 4a | Preparative Example 4 | 52 | 63 |
| Example 5a | Preparative Example 5 | 52 | 88 |
| Com. Example 1a | Com. Preparative Example 1 | 40 | 21 |

### Examples 1 b-5b and Comparative Example 1b

### (Preparation of resin composition)

After melt-kneading of polypropylene (PP) as a thermoplastic resin and the polymer (prepared in Preparative Examples 1-5 and Comparative Example 1) (polypropylene : polymer = 99:1) at 180°C with a twin screw extruder as shown in Table 2, the mixture was molded by heat pressing to give a sheet of 0.2 mm thickness. A contact angle of water and n-hexadecane on the sheet was measured. The results are shown in Table 2.

**Table 2**

| | Polymer | Static contact angle | |
|---|---|---|---|
| | | H₂O | n-HD |
| Blank | None (polypropylene alone) | 98 | 9 |
| Example 1b | Preparative Example 1 | 108 | 25 |
| Example 2b | Preparative Example 2 | 106 | 40 |
| Example 3b | Preparative Example 3 | 104 | 20 |
| Example 4b | Preparative Example 4 | 107 | 21 |
| Example 5b | Preparative Example 5 | 105 | 20 |
| Com. Example 1b | Com. Preparative Example 1 | 103 | 14 |

### Examples 2c and 2d, and Comparative Example 1c and 1d

### (Preparation of resin composition)

After mixing of polyethylene (PE) as a thermoplastic resin with the polymer as shown in Table 3, the mixture was extruded at 200°C by an extruder having a T-die to give a film of 20 µm thickness. A contact angle of water and n-hexadecane on the film was measured and a liquid piece evaluation was determined. The results are shown in Table 3.

**Table 3**

| | Polymer | Charge amount | | Static contact angle | | Liquid piece evaluation | | |
|---|---|---|---|---|---|---|---|---|
| | | PE | Polymer | H₂O | n-HD | H₂O | Oleic acid | Red chili pepper |
| Blank | None | 100 | - | 83 | *10 | Bad | Bad | Bad |
| Example 2c | Pre. Example 2 | 97 | 3 | 100 | 45 | Good | Good | Good |
| Example 2d | Pre. Example 2 | 95 | 5 | 108 | 55 | Good | Good | Good |
| Com. Example 1c | Com. Pre. Example 1 | 97 | 3 | 76 | 35 | Bad | Good | Bad |
| Com. Example 1d | Com. Pre. Example 1 | 95 | 5 | 78 | 39 | Bad | Good | Bad |

### Industrial applicability

The moldings obtained from the water- and oil-repellent resin composition of the present invention are comparatively cheap, and can be uses as products, such as household articles (for example, a washbasin), stationeries (for example, an ink bottle), interior materials (for example, a motor interior and a house interior), exterior materials, outer layer materials, consumer electronics housings, flooring materials, wallpaper, food packing materials, food containers, cosmetic containers, and industrial medicine containers.

## Claims

1. A water- and oil-repellent resin composition which comprises (a) 100 parts by weight of a thermoplastic resin and (b) 0.01-50 parts by weight of a fluorine-containing block copolymer,
wherein the fluorine-containing block copolymer (b) comprises (b1) at least one fluorine-containing block segment and (b2) at least one fluorine-free block segment,
the fluorine-containing block segment (b1) is bonded directly to the fluorine-free block segment (b2), and
the fluorine-containing block segment (b1) is formed from a fluorine-containing acrylate monomer, and the fluorine-free block segment (b2) is formed from a fluorine-free monomer.

2. The water- and oil-repellent resin composition according to claim 1, wherein the thermoplastic resin (a) is at least one selected from the group consisting of a polyamide resin, a polyester resin, a polyolefin resin, a polyether resin, a polyetherester resin, a poly(meth)acrylate resin, an ethylenealkyl (meth)acrylate resin, a polydiene resin, a polyurethane resin, a polyetheretherketone resin, a polyetherimide resin, a polyethersulfone resin, a polyphenylene sulfide resin, a polycarbonate resin and a vinyl chloride resin.

3. The water- and oil-repellent resin composition according to claim 1 or 2, wherein the thermoplastic resin (a) is at least one selected from the group consisting of polyethylene and polypropylene.

4. The water- and oil-repellent resin composition according to any one of claims 1 to 3, wherein the fluorine-containing acrylate monomer is a fluorine-containing acrylate ester represented by the formula:
CH₂=CX-C(=O)-O-Y-Rf
wherein Rf is a perfluoroalkyl having 1 to 8 carbon atoms;
Y is an aliphatic group having at least one 1 to 10 carbon atoms; and
X is a hydrogen atom, a methyl group, a fluorine atom or a chlorine atom.

5. The water- and oil-repellent resin composition according to any one of claims 1 to 4, wherein the fluorine-free monomer is at least one monomer selected from the group consisting of a fluorine-free acrylate monomer, a fluorine-free vinyl monomer and a fluorine-free acrylic acid monomer.

6. The water- and oil-repellent resin composition according to claim 5, wherein the fluorine-free acrylate monomer is represented by the formula:
CH₂=CA¹COO-A²
wherein A¹ is a hydrogen atom, a methyl group, or a halogen atom other than a fluorine atom,
A² is a hydrocarbon group having 1-30 carbon atoms.

7. The water- and oil-repellent resin composition according to claim 6, A¹ is a hydrogen atom, and/or A² is an alkyl group having 14 to 30 carbon atoms, in the fluorine-free acrylate monomer represented by the formula: CH₂=CA¹COO-A².

8. The water- and oil-repellent resin composition according to any one of claims 1 to 7, wherein the fluorine-containing block copolymer is an AB diblock copolymer having one fluorine-containing block segment and one fluorine-free block segment, or an ABA triblock copolymer having two fluorine-containing block segments and one fluorine-free block segment.

9. The water- and oil-repellent resin composition according to any one of claims 1 to 8, wherein a weight ratio of repeating units in the fluorine-containing block segment to repeating units in the fluorine-free block segment is from 5:95-70:30.

10. A method of producing a water- and oil-repellent resin composition which comprises (a) a thermoplastic resin and (b) a fluorine-containing block copolymer,
wherein said method comprises steps of:
(1) preparing the fluorine-containing block copolymer (b) by a living-radical-polymerization process using an alkoxyamine
wherein the fluorine-containing block copolymer (b) comprises (b1) at least one fluorine-containing block segment and (b2) at least one fluorine-free block segment (b2), and
(2) mixing the fluorine-containing block copolymer (b) with the thermoplastic resin (a) to give the water- and oil-repellent resin composition.

11. The method according to claim 10, wherein the alkoxyamine is N-(2-methylprolyl)-N-(1-diethylphosphono-2,2-dimethylpropyl)-O-(2-carboxylprop-2-yl) hydroxylamine.

12. A method of producing a molded product, which comprises molding the water- and oil-repellent resin composition according to any one of claims 1 to 9.

13. A molded product prepared by molding the water- and oil-repellent resin composition according to any one of claims 1 to 9.

14. Use of the water- and oil-repellent resin composition according to any one of claims 1 to 9, as household articles, stationery, motor interiors, house interiors, outer layer materials, consumer electronics housings, flooring materials, wallpaper, food packing materials, food containers, cosmetic containers, and industrial medicine containers.
